# EUROPEAN PATENT APPLICATION

(11) **EP 2 713 332 A1**
(43) Date of publication of application: **02.04.2014**
(21) Application number: 13159298.2
(22) Date of filing: 14.03.2013
(51) Int. Cl.: G06Q 30/02

(54) **Guided analytics**

(30) Priority: 28.09.2012 IN MU28822012
(71) Applicant: Tata Consultancy Services Limited, 400021 Mumbay (IN)
(72) Inventor: Cherusseri, Suresh, 400076 Mumbai (IN); Nagaranjan, Karuppiah, 603103 Siruseri (IN)
(74) Representative: Dilg, Haeusler, Schindelmann Patentanwaltsgesellschaft mbH

(57) **Abstract**

A method and a system described herein relate to guided analytics for analysis of data. In one implementation, the method includes acquiring enterprise data and external intelligence data, and identifying facts, which are measures, and attributes, which are indicative of a characteristic parameter to which the measures correspond, from the enterprise data and the external intelligence data. The method also includes identifying influencing links, where each of the influencing links is indicative of a relationship amongst the facts and the attributes. The method further includes analyzing the facts to obtain analyzed data and identifying at least one correlation in the analyzed data based on at least one of the influencing links and the external intelligence data. The analyzing is carried out using at least one predefined analytical model and is in relation to at least one of the attributes and at least one of the influencing links.

## Description

The present subject matter relates, in general, to data analysis and, particularly but not exclusively, to a computer-implementable system and method for data analysis for an enterprise.

### BACKGROUND

Today the global retail market is going through significant changes by attracting customers in various format stores, channels and advertisements. Enterprise wise assimilation of data for key decisions are becoming major challenges due to multiple factors, such as size customer interaction touch points and majorly social media influences. This requires enormous level of system involvement to guide the decision making authorities in more reliable way.

For the purposes of monitoring the performance, the retail enterprises may analyze the retail data in a guided manner, which may be understood as guided analytics. It is important to identify efficient methodologies for guided analytics as they may be beneficial for an enterprise for monitoring its retail and taking timely decisions for the purpose of promoting its growth and sustaining its position in the market.

### SUMMARY

This summary is provided to introduce concepts related to systems and methods for guided analytics and these concepts are further described below in the detailed description. This summary is not intended to identify essential features of the present subject matter nor is it intended for use in determining or limiting the scope of the present subject matter.

System(s) and method(s) for guided analytics are described. In one implementation, enterprise data and external intelligence data are acquired. The external intelligence data includes data related to external parameters influencing the enterprise data. Facts and attributes from the enterprise data and the external intelligence data are identified, where each of the facts is a measure in at least one of the enterprise data and the external intelligence data, and where each of the attributes is indicative of a characteristic parameter to which the measure corresponds. Further, influencing links are identified, where each of the influencing links is indicative of a relationship amongst the facts and the attributes. Further, the facts are analyzed to obtain analyzed data. The analysis of facts is carried out using at least one predefined analytical model, and the analysis is in relation to at least one of the attributes and at least one of the influencing links. Further, at least one correlation is identified in the analyzed data based on at least one of the influencing links and the external intelligence data.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network environment implementing a guided analytics system for analysis of data, in accordance with an implementation of the present subject matter.

Figure 2 illustrates a method for guided analytics, in accordance with an implementation of the present subject matter.

### DETAILED DESCRIPTION

The present subject matter relates to systems and methods for guided analytics for analysis of data for an enterprise.

A retail enterprise may operate one or more stores in a town, in a city or in a country-wide region that may offer a variety of products to customers. The products may include consumer goods, such as eatables, apparels, appliances, accessories, and utility goods. Such a retail enterprise may gather data associated with its stores and products, including sales data and inventory data, based on which the enterprise may monitor sales and analyze the behaviour of sales.

Typically, the sales data and the inventory data gathered by the enterprise are substantially large. Such data are converted into discrete information, for example, in silos, for the purpose of analyzing the behaviour of sales. Conventional methods for data analysis and conversion of data into information rely on reports or dashboards. This is done to report the data that has been already occurred. Based on such reported information, the decision making for the enterprise is substantially difficult because of the time to respond may have already got expired.

Further, conventional methods of data analysis and conversion of data into information do not consider external intelligence parameters that may directly or indirectly influence the sales of products. Thus, it is difficult to analyze the data, identify the casual elements from the data or estimate the why-part of sales or the reasons for sales trends for the enterprise from the data gathered by the enterprise. Without the knowledge of the why-part or the reasons of sales trends, it is difficult to guide the enterprise in regard with improvement of the sales, and the enterprise may not be able to make timely decisions in case their sales are affected or going down.

Furthermore, conventionally, some enterprises may employ data mining and predictive analysis to forecast its sales and performance for the purposes of knowledge of potential of the enterprise and its position in the market. However, such techniques also do not analyze the data of enterprise to estimate the why-part of sales or the reasons for sales trends by the enterprises and provide guidance to the enterprise.

Systems and methods for guided analytics for analysis of data for an enterprise are described herein. For the purposes of the present subject matter, guided analytics may be understood as an analysis of enterprise-level data in a guided manner. Guided analytics implemented through the systems and the methods of the present subject matter may facilitate in an efficient analysis of the enterprise-level data, such that the why-part or reasons for behaviour of the enterprise-level data may be estimated in an efficient manner and/or a guidance may be provided to the enterprise, such that the enterprise can take enterprise-level decisions in time for improving its performance to keep up its market share.

For an enterprise, such as a retail-based enterprise, the enterprise-level data may include, but is not restricted to, data related to product-wise sales and inventory, store-wise sales and inventory, date and time-wise sales and inventory, product costs, store locations, product locations in stores, profits, product profit margins, customer details who may visit the store, and such. The enterprise-level data may also include data related to product characteristics, for example, names, identification codes, dimensions, weights, and such. For the sake of simplicity, the enterprise-level data hereinafter may be referred to as the enterprise data.

The methodology followed for guided analytics for analysis of enterprise data, according to the present subject matter, is based on acquiring of the enterprise data and unification of the enterprise data into factual data and attributes corresponding to the factual data. The unification of the enterprise data is understood as grouping or categorizing the enterprise data into the factual data and the attributes. Each of the factual data may be indicative of a measure, or a figurative value, in the enterprise data, and each of the attributes may be indicative of a characteristic parameter in the enterprise data, to which the measure or the figurative value corresponds. For each of the factual data there may be more than one attributes. For the sake of simplicity, the factual data hereinafter may be referred to as the fact.

The methodology of the present subject matter is also based on acquiring of, in addition to the enterprise data, data related to external parameters that may be indirectly associated with the enterprise data and may influence current or future enterprise data, for example, current or future sales of products. The external parameters may include, but are not restricted to, social media content, census, competitors, Growth Domestic Product (GDP), and such. The data related to external parameters hereinafter may be referred to as external intelligence data. In addition to unification of the enterprise data, the external intelligence data is also unified into facts, and attributes corresponding to the facts, in the external intelligence data. The unification of the external intelligence data is understood as grouping or categorizing the external intelligence data into the factual data and the attributes.

The methodology according to the present subject matter is further based on identification of influencing links that are indicative of relationships between two of the facts, or two of the attributes, or a fact and an attribute. The facts are then analyzed in relation to at least one of the attributes and at least one of the influencing links to obtain analyzed data. In an implementation, the facts may be analyzed using one or more predefined analytical models. In the analyzed data, one or more correlations are identified based at least on the influencing links and the external intelligence data, where the identified correlations may facilitate in estimating the why-part or the reasons of behaviour of the analyzed data and/or may facilitate in providing guidance to the enterprise for improving the performance to keep up its market share.

In an implementation, results may be generated based on the analyzed data and the identified correlations, which may provide information on behaviour of the enterprise data, information on the why-part or the reasons of behaviour of the enterprise data, and/or information to provide guidance to the enterprise. Further, in an implementation, erroneous data or outliers may be eliminated from the results based on the correlations in the analyzed data.

In an implementation, one or more from influencers, weightage factors and correlation rules are obtained and utilized for the analysis of the facts and the identification of correlations in the analyzed data. The influencers may relate to factors that may directly influence the facts from the enterprise data and/or the external intelligence data. Such factors may include discounts, seasonal discounts, promotions, addition of new products, and such. Each of the weightage factors may relate to data indicative of a predefined contribution of one of the influencers or a predefined contribution of one of the influencing links to the facts in the enterprise data and/or the external intelligence data. Further, the correlation rules may relate to predefined business rules indicative of possible correlations between the facts, the external intelligence data, the influencing links, and the influencers.

The unification of the enterprise data into the facts and attributes facilitates in easy and efficient analysis of the enterprise data. Further, the methodology employing the acquiring of the external intelligence data and its unification into facts and attributes; identification of influencing links amongst or between the facts and the attributes; the obtaining of one of the influencers, the weightage factors and the correlation rules; the analysis of the facts based on attributes and influencing links; and the identification of correlations in the analyzed data, facilitates in estimating the why-pat-t or the reasons of behaviour of the enterprise data, and provide guidance to the enterprise in an efficient manner.

The guidance may be provided to suggest ways, or allow stakeholders associated with enterprises to find ways, for example, target a particular set of customers, increase inventory, open more stores, add discounts, improvements in promotions, and such, for improving performance to keep up the sales and sustain in the market. Thus, the methodology of the present subject matter for guided analytics of enterprise data is substantially more effective in comparison to the conventional methodologies.

While aspects of described systems and methods for the guided analytics can be implemented in any number of different computing systems, environments, and/or configurations, the embodiments are described in the context of the following exemplary system(s).

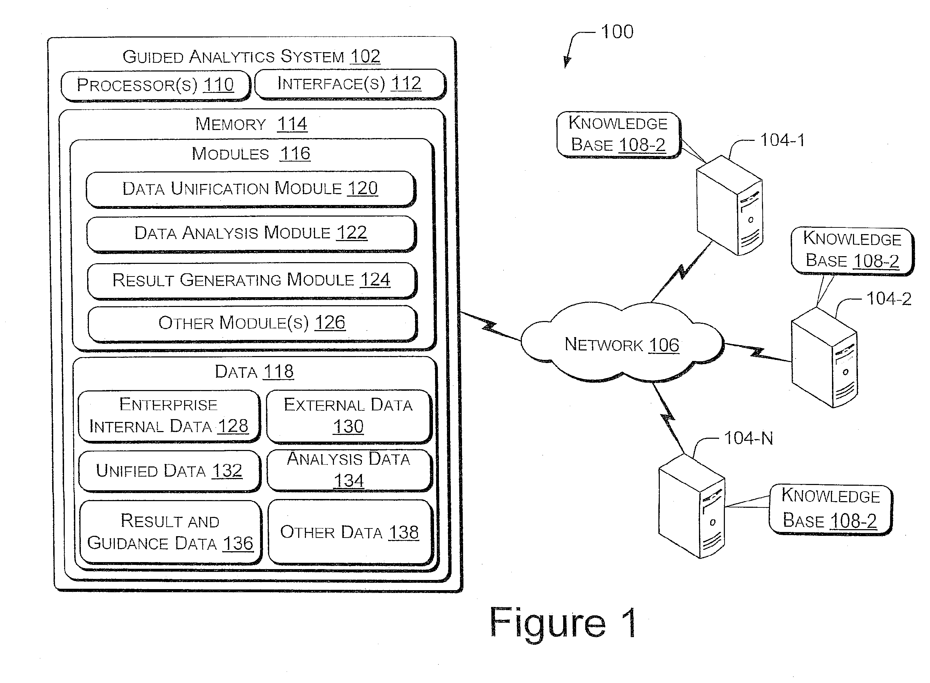

Figure 1 illustrates a networking system 100 implementing a guided analytics system 102 configured to analyze enterprise data, according to an implementation of the present subject matter. In an implementation, the guided analytics system 102 is configured to analyze enterprise data of an enterprise by creating an effective guided analytics framework. The guided analytics system 102 is also configured to identify one or more correlations in the analyzed data for estimation of the why-part or the reasons of behaviour of the enterprise data, and or for provision of guidance to the enterprise, as described earlier. The guided analytics system 102 may be implemented in a server or a computing device that includes, but is not limited to, a desktop PC, a notebook, a portable computer, a smart phone, a PDA, a tablet, and the like.

In an implementation, the guided analytics system 102 may communicate with one or more servers 104-1, 104-2, ..., 104-N hosting data required for the purpose of guided analytics. The servers 104-1, 104-2, ... , 104-N, hereinafter, collectively may be referred to as the servers 104 and individually may be referred to as the server 104. In an implementation, the one or more servers 104 may be associated with the enterprise for which the guided analytics is performed or may be associated with external entities to provide external intelligence data, influencers, weightage factors, correlation rules, and such, as mentioned earlier. The server 104 may be implemented as any of a variety of computing devices, including, for example, a server, a workstation, and a mainframe computer. The server 104 may be one of a storage server or a network server, or combination of one or more such servers.

The guided analytics system 102 of the present subject matter may be communicatively coupled to the server 104 over a network 106 through one or more communication links. The communication links between the guided analytics system 102 and the server 104 are enabled through a desired form of communication, for example, via dial-up modem connections, cable links, and digital subscriber lines (DSL), wireless or satellite links, or any other suitable form of communication. The network 106 may be understood as a network, including personal computers, laptops, various servers and other computing devices.

Further, the network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network may include network devices, such as network switches, hubs, routers, and Host Bus Adapters (HBAs), for providing a link between the guided analytics system 102 and the server 104. The network devices within the network 106 may interact with the guided analytics system 102 and the server 104 through the communication links.

In an implementation, each of the servers 104 may be implemented with a knowledge base 108-1, 108-2, ..., 108-N, hereinafter may be collectively referred to as knowledge bases 108 and individually referred to as a knowledge base 108. The knowledge base 108 may store and provide information or data that may be utilized for the purposes of guided analytics as described in the description hereinafter. In an implementation, the knowledge base 108 may also include rules, procedural representations, use case scenarios, etc. These rules may be implemented as conditional statements providing a result in response to various scenarios. In one implementation, the knowledge base 108 is periodically updated and modified with new data, new rules and best practices followed in enterprises.

Further, the guided analytics system 102 may be a software-based implementation or a hardware-based implementation or a combination thereof. In one implementation, the guided analytics system 102 may be implemented on the server 104 or may be implemented external to the server 104 and accessed for the purposes of guided analytics for an enterprise.

The guided analytics system 102 includes one or more processor(s) 110, interface(s) 112, and a memory 114 coupled to the processor(s) 110. The processor 110 can be a single processor unit or a number of units, all of which could include multiple computing units. The processor 110 may be implemented as one or more microprocessors, microcomputers, microcontrollers, digital signal processors, central processing units, state machines, logic circuitries, and/or any devices that manipulate signals based on operational instructions. Among other capabilities, the processor 110 is configured to fetch and execute computer-readable instructions and data stored in the memory 114.

The interface(s) 112 may include a variety of software and hardware interfaces, for example, interfaces for peripheral device(s), such as a keyboard, a mouse, an external memory, and a printer. The interface(s) 112 may enable the guided analytics system 102 to communicate with other devices, such as external computing devices and external databases.

The memory 114 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

The memory 114 includes module(s) 116 and data 118. The modules 116 include routines, programs, objects, components, data structures, and the like, which perform particular tasks or implement particular abstract data types. The modules 116 further include modules that supplement applications on the guided analytics system 102, for example, modules of an operating system. The data 118, amongst other things, serves as a repository for storing data that may be processed, received, or generated by one or more of the modules 116.

In an implementation, the modules 116 of the guided analytics system 102 include a data unification module 120, a data analysis module 122, a result generation module 124, and other module(s) 126. The other module(s) 126 may include programs or coded instructions that supplement applications and function, for example, programs in the operating system of the guided analytics system 102.

In an implementation, data 118 include enterprise internal data 128, external data 130, unified data 132, analysis data 134, result and guidance data 136, and other data 138. The other data 138 includes data generated as a result of the execution of one or more modules in the other module(s) 126.

In an implementation, a user may access the guided analytics system 102 for the guided analytics for analysis of enterprise data of one or more enterprises. For the purposes of the description herein, the user may be understood as a professional who has skills and capability of analyzing the enterprise data. The user may include one or more of an enterprise manager, an enterprise head, a consultant or any other member involved in the enterprise. In an implementation, the user may be an authentic user who is allowed to access the guided analytics system 102. In an implementation, the user is provided with a user interface, such as a graphic user interface (GUI), which may be used for the purposes of guided analytics.

In an implementation, the user may identify an enterprise for which the guided analytics is to be performed or carried out. The guided analytics system 102 may accordingly receive a request from the user for the guided analytics. In an example, the enterprise may be a retail enterprise operating one or more stores and offering one or more products to customers. Further, in an example, the guided analytics system 102 may be dedicatedly implemented for a predefined retail enterprise.

In an implementation, the data unification module 120 acquires enterprise data associated with an enterprise for which the guided analytics is to be carried out, in accordance with the present subject matter. The data unification module 120 may automatically fetch the enterprise data on a predefined basis from the knowledge base 108 of one or more of the servers 104. Such server(s) 104 may be functioning as enterprise data hub(s). The data unification module 120 may also allow the user to manually feed or fetch the enterprise data from the knowledge base 108. The enterprise data may be stored in the enterprise internal data 128 of the guided analytics system 102.

The enterprise data may include, but is not restricted to, one or more of the following:
- data related to details of products, for example, names, identification codes, dimensions, weights, and such;
- product-wise sales details and inventory details, for example, number of products sold, number of products in the inventory, revenue generated from each of the products, and such;
- store-wise sales details and inventory details, for example, sales of products from each of the stores, products in the inventory of each of the stores, and such;
- date- and time-wise sales details and inventory details, for example, sales of each of the products from each of the stores on particular dates and times, and such;
- cost of products offered in the one or more stores;
- details of the one or more stores, for example, name, address, contact number, near-by landmark, size, inventory capacity and such;
- location of products in the one or more stores;
- profits, for example, profits earned from each of the products, stores, day, and such;
- profit margins on products; and
- number of employees in each of the stores.
The above examples of the enterprise data are mentioned only for the purpose of the description herein, and other examples of the enterprise data are also possible.

The enterprise data may also include the following:
- details of customers registered with the one or more stores or visiting the one or more stores.
The details of customers may include, but not restricted to, name, age, complete address, number of family members, age-wise details of family members, income, job-type and customer identification number for each of the customers.

In an implementation, the data unification module 120 also acquires external intelligence data for the purpose of guided analytics, in accordance with the present subject matter. The data unification module 120 may automatically fetch the external intelligence data on a predefined basis from the knowledge base 108 of one of the servers 104. Such a server 104 may be functioning as an external intelligence system or an external intelligence data hub. The data unification module 120 may also allow the user to manually feed or fetch the external intelligence data from the knowledge base 108. The external intelligence data may be stored in the external data 130 of the guided analytics system 102.

The external intelligence data, as mentioned earlier, may include data related to external parameters that may be indirectly associated with the enterprise data and may influence current or future enterprise data, for example, current or future sales of products. The external parameters may include, but not restricted to, the following:
- social media content, for example, blogs, surveys, news articles, and such, where the social media content may be indicative of sentiments of people against one or more products;
- census, for example, projected population growth, and such, for a region or a country where one or more stores are located;
- GDP, for example, current and projected percentage growth in GDP for a region or a country where one or more stores are located; and
- competitors, for example, products offered, cost of products, number of stores and their locations, sales details, profit details, discounts offered on the products, promotions, addition of new products, and such for one or more of the competitors.
The above examples of the external intelligence data are mentioned only for the purpose of the description herein, and other examples of the external intelligence data are also possible.

Upon acquiring the enterprise data and the external intelligence data, the data unification module 120 unifies the enterprise data and the external intelligence data by identifying the facts, and the attributes associated with the facts, present therein. As described earlier, each of the facts may be indicative of a measure, or a figurative value, in the enterprise data and the external intelligence data, and each of the attributes may be indicative of a characteristic parameter in the enterprise data and the external intelligence data, to which the measure or the figurative value corresponds. Each fact may correspond to more than one attributes. The identified facts and the attributes may be stored in the unified data 132 in the guided analytics system 102.

In an implementation, for the unification of the enterprise data and the external intelligence data, one or more possible relationships between various facts and attributes are predefined as unification metadata by an expert and/or a professional having skills to analyze the enterprise data. Based on the unification metadata, the enterprise and the external intelligence data are unified as facts and attributes related to each other, as per the values of the facts and the information in the attributes. In an implementation, the unification metadata is stored in the guided analytics system 102. In an implementation, the unification metadata may be stored in an external database or the knowledge base 108, and the data unification module 120 may refer to such database or knowledge base for the unification of data.

The facts in the enterprise data may include, but not restricted to, the following:
- sale details;
- inventory details;
- cost details;
- profit details; and
- profit margin details.

The attributes in the enterprise data, corresponding to which one or more facts are identified, may include, but not restricted to, the following:
- product details, for example, name, identification code, dimensions, location in the store, etc., of the product for which the sale, inventory, cost, profit, profit margin are acquired;
- store details, for example, name, location, etc., of the store for sale, inventory, profits are acquired;
- date of sale;
- time of sale;
- details of customer who contributed to the sales and profits from the products.

The facts in the external intelligence data may include, but not restricted to, the following:
- product sentiment details from the social media content;
- population growth details from census;
- GDP details; and
- number of products, sale details, inventory details, cost of products, profit details, and such, for one or more competitors.

The attributes in the external intelligence data may include, but not restricted to, the following:
- details of products for which the product sentiment details are acquired from social media content;
- census of a region or a country where one or more stores are located;
- GDP of a region or a country where one or more stores are located;
- product details, for example, name, identification code, etc., of the products for which the sale, inventory, cost, profit, profit margin are acquired for one or more competitors; and
- store details, for example, name, location, etc., of the store for sale, inventory, profits are acquired for one or more competitors.

In an implementation, the data unification module 120 is configured to tag each of the identified facts with a unique identifier, for example, an identification code. The facts may be referred using the corresponding unique identifier in the guided analytics system 102 for various purposes, including analysis of facts.

In an implementation, the data unification module 120 is configured to identify one or more influencing links amongst or between the facts and the attributes across from the enterprise data and the external intelligence data. The data unification module 120 may automatically identify the one or more influencing links based on the facts and the attributes in the guided analytics system 102, or may allow the user to manually feed data or information related to the possible one or more influencing links. Each of the influencing links may be indicative of a relationship between two facts, two attributes or a fact and an attribute. The identified influencing links are stored in the unified data 132 of the guided analytics system 102.

In an implementation, for the identification of influencing links, one or more possible relationship links between various facts and attributes are predefined as link metadata by an expert and/or a professional having skills to analyze the enterprise data. Based on the link metadata, the influencing links amongst or between the facts and the attributes are identified, as per the values of the facts and the information in the attributes. In an implementation, the link metadata is stored in the guided analytics system 102. In an implementation, the link metadata may be stored in an external database or the knowledge base 108, and the data unification module 120 may refer to such database or knowledge base for the identification of the influencing links.

The influencing links may include, but are not restricted to, links between the following:
- sales detail and inventory details for products and/or for stores;
- sales details and profit details for products and/or for stores;
- sales/profit details and cost details for products;
- sales/profit details and profit margin details for products;
- sales/profit details of products and one or more details of customers who purchased the same products;
- sales/profite details of products and likings of customers in a particular age group;
- sales/profile details and product sentiment details for products;
- sales/profit details of products and one or more details of competitors offering the same products;
- sales/profit details of products and GDP; and
- sales/profit details of products and census details.
The above examples of the influencing links are mentioned only for the purpose of the description herein, and other examples of the influencing links are also possible.

In an implementation, the data unification module 120 is configured to obtain influencers that may directly influence the facts at least from the enterprise data. The influencers may include, but are not restricted to, discounts, seasonal discounts, promotions, addition of new products, holiday season, festival season, and such. The data unification module 120 may automatically fetch the influencers on a predefined basis from an external database, or may allow the user to manually feed the data related to influencers. The data related to the influencers may be stored in the unified data 132 in the guided analytics system 102.

Further, in an implementation, the data unification module 120 is configured to obtain one or more weightage factors that may be indicative of a predefined contribution of the individual influencers, or the individual influencing links, to the facts in the enterprise data and/or the external intelligence data. The weightage factors may be in the form of fractional numbers or percentages corresponding to individual influencers and influencing links. The weightage factors may be considered for the purposes of analysis of enterprise data and/or for identifying one or more correlations in the analyzed data, as described later in the description. The data unification module 120 may automatically fetch the weightage factors on a predefined basis from an external database, or may allow the user to manually feed the data related to weightage factors. The data related to the weightage factors may be stored in the unified data 132 in the guided analytics system 102.

Further, in an implementation, the data unification module 120 is configured to obtain one or more correlations rules that may relate to predefined business rules based on which possible correlations may be drawn or identified between the facts, the external intelligence data, the influencing links and the influencers. The correlations rules may be considered for the purposes of analysis of enterprise data and/or for identifying one or more correlations in the analyzed data, as described later in the description. The data unification module 120 may automatically fetch the correlations rules on a predefined basis from an external database, or may allow the user to manually feed the data related to correlations rules. The data related to the correlations rules may be stored in the unified data 132 in the guided analytics system 102.

Upon unification of the enterprise data and the external intelligence data, identification of influencing links, obtaining of influencers, weightage factors and correlations rules, in an implementation, the data analysis module 122 analyzes the facts to obtain analyzed data. The facts may be analyzed in relation to at least one of the attributes and at least one of the influencing links. The facts may be analyzed using one or more predefined analytical model, where the predefined analytical models may be mathematical models based on regression analysis, clustering, distribution, association, and such. In an implementation, the one or more predefined analytical models may be implemented within the guided analytics system 102. In an implementation, the data analysis module 122 may communicate with one of the servers 104 for the purpose analyzing the facts using the one or more predefined analytical models in the server 104. The analyzed data may be stored in the analysis data 134 of the guided analytics system 102.

In an example, the predefined analytical model may include a customer segmentation analytical model. Such an analytical model may be used to analyze facts, including sales and profits, in relation with the customer related attributes and the related influencing links, based on a selection by the user. The customer segmentation analytical model may be used to estimate the why-part or the reasons of sales of products, or profits earned, or contribution to sales, for the customers visiting the stores. The customer segmentation analytical model may also be used to provide guidance to the user or the enterprise in respect of which set of customers be targeted for improving the sales of products from one or more stores operated by the enterprise.

In another example, the predefined analytical model may include a sales analytical model, which may be used to analyze facts, including sales and profits, for one or more products offered by the enterprise. The sales analytical model may be used to estimate the why-part or the reasons of sales of products, or profits earned, for the products. The sales analytical model may also be used to provide guidance to the user or the enterprise in respect of what measures may be taken for improving the sales of products from one or more stores operated by the enterprise.

It may be understood that the above examples of predefined analytical models are mentioned only for the purpose of the description herein, and other examples of analytical models are also possible.

In an implementation, the data analysis module 122 is configured to identify one or more correlations in the analyzed data, where the one or more correlations relate the variations or the behaviour of the analyzed data with one or more from the facts and the attributes from the enterprise data, the facts and the attributes from the external intelligence data, influencers, and such. The data analysis module 122 may use one or more identified influencing links, the external intelligence data, the weightage factors and the correlation rules for the identification of correlations in the analyzed data. The identified correlations may facilitate in estimating the why-part or the reasons of behaviour of the analyzed data and/or may facilitate in providing guidance to the enterprise for improving the performance to keep up its market share. The identified correlations may be stored in the analysis data 134 of the guided analytics system 102.

In an example, sale of a product is analyzed using the sales analytical model. In the analyzed data, if an increase or a decrease in the sale is observed for a product in the analyzed data, one or more correlations may be identified between the increase or the decrease in the sale and one or more of the following:
- the influencers, for example, discounts during the festive season, or new product;
- the external intelligence data, for example, sentimental index for the product on blogs or surveys, or GDP, or census;
- the customer details, for example, number of kids or senior citizens in the family, or earnings, particular likings;
- the store related details, for examples, number of products in the inventory, number of stores available to the customers, location of products in the store.
Further, by leveraging the associated weightage factors on the analyzed data, the contribution of each individual identified correlation to the increase or the decrease in the sale can be estimated or determined. It may be understood that the above examples of correlations are mentioned only for the purpose of the description herein, and other examples of correlations are also possible.

In another example, sale of products is analyzed with respect to the registered customers using the customer segmentation analytical model. From the analyzed data, top 100 registered customers contributing to the sale of products are identified. Based on the data for the top 100 customers, one or more correlations may be identified between the sale and one or more of the following:
- ammal earnings of the customers;
- residence location of the customers;
- number of children in the family of the customers;
- number of senior citizens in the family of the customers;
- job-type of the customers.
Again, it may be understood that the above examples of correlations are mentioned only for the purpose of the description herein, and other examples of correlations are also possible.

In an implementation, upon analyzing the facts and identifying the correlations in the analyzed data, the result generation module 124 generates result data based on the analyzed data and the identified correlations. The result data may provide information on behaviour of the enterprise data, information the why-part or the reasons of behaviour of the enterprise data, and/or information to provide guidance to the enterprise. The result data may be stored in the result and guidance data 136 of the guided analytics system 102.

For example, based on the analyzed data related to sale of a product and one or more identified correlations, result data may provide an estimate on contribution of the one or more identified correlations to the sale trend of product. This may facilitate the user to estimate the why-part or the reasons of an increase or decrease of the sale of product, such that the user or the enterprise can take decisions to improve the sale of product further. In an example, the result data may show that sale of a product is decreasing and the correlation with the decrease of sale may be identified as no discounts in festive season, a low volume in the inventory and negative sentimental index for the product in social media. Based on such correlations in the result data, the user or the enterprise may be suggested to provide discounts on the product in festive seasons, increase the volume of the product in the inventory and promote the product to improve on the sentimental index in the social media.

In another example, based on the analyzed data related to sale of products and one or more correlations with respect to details of registered customers, result data may provide details on contribution of the registered customers based on their annual earnings, number of children or senior citizens in their family, their job-type, and such, to the sale trends of products. Such a result data may facilitate in providing guidance to the user or to the enterprise on the type of customers to be targeted in order to sustain or improve the sale of products. In an example, the result data may show that the sale of products like chocolates, toys and stationary is more against customers having at least one child below 10 years in the family, or may show that the sale of foreign brand apparels is more against customers having annual earnings of more than 10 lakh. Based on such correlations in the result data, the user or the enterprise may be provided with guidance suggestive of targeting of customers with kids for toys, stationary and chocolates, and/or targeting of customers with high annual earnings for foreign brand apparels.

Further, in an implementation, the result generation module 124 is configured to eliminate erroneous data or outliers from the result data based on the analyzed data and the identified correlations. The result generation module 124 may automatically eliminate the outliers in the result data, or may allow the users to manually eliminate the outliers in the result data. The outliers may include the facts that may show up in the result data due to wrong entries in the enterprise data or the external intelligence data. Also, an outlier may show up as a skewed data in the result data with respect to the normal or expectable behaviour of the result data. In an example, an outlier may include a wrong number of products in the inventory, a wrong cost of a product, wrong annual earnings of a customer, a wrong GDP data, a wrong census data, and such.

Furthermore, in an implementation, the guided analytics system 102 may be configured to acquire the enterprise data and the external intelligence data in real-time or periodically, or as decided by the user. Similarly, in an implementation, the guided analytics system 102 may be configured to unify the enterprise data and the external intelligence data, and analyze the facts in real-time or periodically, or as decided by the user. Further, in an implementation, the guided analytics system 102 may update the analyzed data and the result data to a database managed by the enterprise, for future reference.

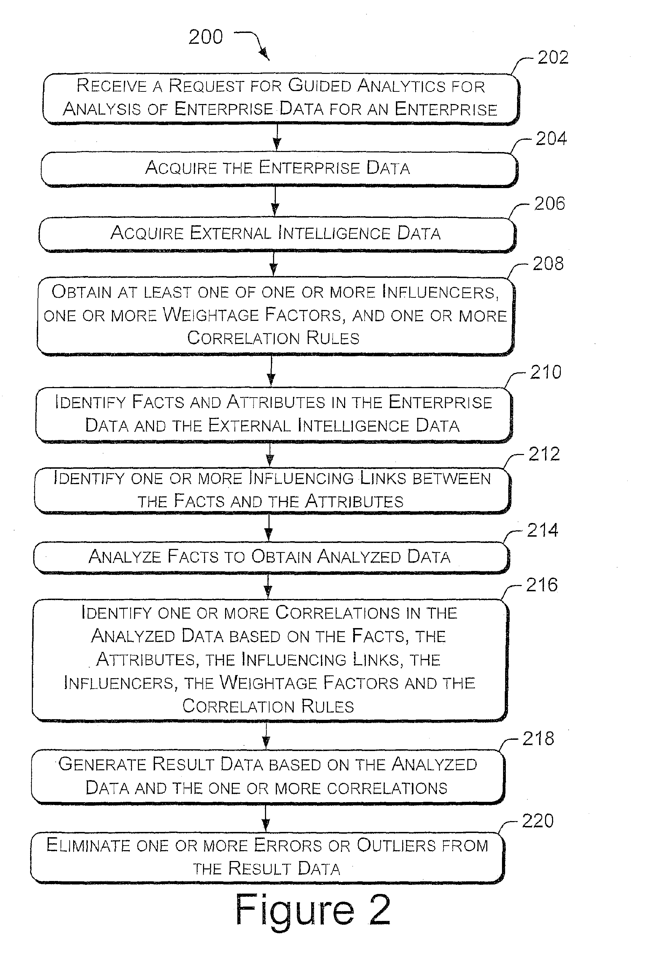

Figure 2 illustrates a method 200 for guided analytics for an enterprise, in accordance with an implementation of the present subject matter. The method 200 may be described in the general context of computer executable instructions. Generally, computer executable instructions can include routines, programs, objects, components, data structures, procedures, modules, and functions that perform particular functions or implement particular abstract data types. The method 200 may also be practiced in a distributed computing environment where functions are performed by remote processing devices that are linked through a communications network. In a distributed computing environment, computer executable instructions may be located in both local and remote computer storage media, including memory storage devices.

The order in which the method 200 is described is not intended to be construed as a limitation, and any number of the described method blocks can be combined in any order to implement the method 200, or an alternative method. Additionally, individual blocks may be deleted from the method 200 without departing from the spirit and scope of the subject matter described herein. Furthermore, the method 200 can be implemented in any suitable hardware, software, firmware, or combination thereof.

Referring to Figure 2, although the method 200 for guided analytics may be implemented in a variety of guided analytics systems, in the embodiments described in Figure 2, the method 200 is explained in context of the aforementioned the guided analytics system 102 for the ease of explanation.

At block 202, a request is received for guided analytics for analysis of enterprise data of an enterprise. In an implementation, the request may be received from a user, such as a professional having skills to carry out guided analytics. The user may identify an enterprise for guided analytics and accordingly make a request at the guided analytics system 102.

At block 204, the enterprise data is acquired, where the enterprise data is associated with the enterprise for which the guided analytics is to be carried out. The type of data included in the enterprise data is as described earlier. In an implementation, the guided analytics system 102 may acquire the enterprise data from the user, or from a knowledge base 108 in one of the servers 104 functioning as the enterprise data hub, or from an external database having relevant data associated with the enterprise.

At block 206, external intelligence data is acquired, where the external intelligence data relates to external parameters that may indirectly influence the enterprise data. The type of data included in the external intelligence data is as described earlier. In an implementation, the guided analytics system 102 may acquire the external intelligence data from the user, or from a knowledge base 108 in one of the servers 104 functioning as the external intelligence data hub, or from an external database having relevant data associated with the external intelligence.

At block 208, at least one of one or more influencers, one or more weightage factors and one or more correlation rules are obtained. As described earlier, the influencer may include parameter that may directly influence at least the facts in the enterprise data; the weightage factor may be indicative of a predefined contribution of the individual influencer, or the individual influencing link, to the facts in the enterprise data and/or the external intelligence data; and the correlation rules may relate to predefined business rules based on which possible correlations may be drawn or identified between the facts, the external intelligence data, the influencing links and the influencers. In an the implementation, the guided analytics system 102 may automatically obtain the influencers, the weightage factors and the correlation rules on a predefined basis from an external database, or may allow the user to manually feed the data related to influencers, weightage factors and correlation rules. The one or more influencers, the one or more weightage factors and the one or more correlation rules may be used for analysis of facts and/or for identifying one or more correlations in the analyzed data.

At block 210, facts, and attributes associate with the facts, in the enterprise data and the external intelligence data are identified. As described earlier, each of the facts may be indicative of a measure, or a figurative value, in the enterprise data and the external intelligence data, and each of the attributes may be indicative of a characteristic parameter in the enterprise data and the external intelligence data, to which the measure or the figurative value corresponds. The types of facts and the types of attributes are as mentioned earlier.

At block 212, one or more influencing links between the facts and the attributes are identified across from the enterprise data and the external intelligence data. Each of the influencing links may be indicative of a relationship between two facts, two attributes or a fact and an attribute. In an implementation, the guided analytics system 102 may automatically identify the one or more influencing links, or may allow the user to manual feed data or information related to the possible one or more influencing links.

At block 214, the identified facts are analyzed in relation to at least one of the attributes and at least one of the influencing links to obtain analyzed data. In an implementation, the facts may be analyzed using one or more predefined analytical models, where the predefined analytical model may be a mathematical model based on regression analysis, clustering, distribution, association, etc.

Upon analyzing the facts and obtaining the analyzed data, one or more correlations are identified in the analyzed data at block 216. As described earlier, the correlations may relate the variations or the behaviour of the analyzed data with one or more from the facts and the attributes from the enterprise, the facts and the attributes from the external intelligence data, influencers. For the identification of correlations in the analyzed data, one or more identified influencing links, the external intelligence data, the weightage factors and the correlation rules may be used.

At block 218, result data is generated based on the analyzed data and the identified correlations. The result data may provide information on behaviour of the enterprise data, information the why-part or the reasons of behaviour of the enterprise data, and/or information to provide guidance to the enterprise.

Further, at block 220, one or more errors or outliers are eliminated from the result data. As described earlier, the error or the outlier may include the facts that may show up in the result data due to a wrong entry of data. In an implementation, the errors or the outliers in the result data may be automatically eliminated, or may be manually eliminated by the users.

Although embodiments for guided analytics for analysis of enterprise data have been described in language specific to structural features and/or methods, it is to be understood that the invention is not necessarily limited to the specific features or methods described. Rather, the specific features and methods are disclosed as exemplary embodiments for guided analytics.

## Claims

1. A method for guided analytics, the method comprising:
acquiring enterprise data;
acquiring external intelligence data, wherein the external intelligence data includes data related to external parameters influencing the enterprise data;
identifying facts from the enterprise data and the external intelligence data, wherein each of the facts is a measure in at least one of the enterprise data and the external intelligence data;
identifying attributes from the enterprise data and the external intelligence data, wherein each of the attributes is indicative of a characteristic parameter to which the measure corresponds;
identifying influencing links, wherein each of the influencing links is indicative of a relationship amongst the facts and the attributes;
analyzing the facts to obtain analyzed data, wherein the analyzing is carried out using at least one predefined analytical model, and wherein the analyzing is in relation to at least one of the attributes and at least one of the influencing links; and
identifying at least one correlation in the analyzed data based on at least one of the influencing links and the external intelligence data.

2. The method as claimed in claim 1 further comprises:
generating result data based on the analyzed data and the at least one correlation, wherein the result data is indicative of a behaviour of the enterprise data.

3. The method as claimed in claim 2 further comprising:
eliminating at least one outlier in the result data.

4. The method as claimed in claim 2 further comprising:
providing guidance based on the result data.

5. The method as claimed in claim 1 further comprising:
obtaining at least one of at least one influencer, at least one weightage factor and at least one predefined correlation rule associated with the enterprise data and the external intelligence data, wherein the identifying the at least one correlation is based on at least one of the at least one influencer, the at least one weightage factor and the at least one predefined correlation rule.

6. A guided analytics system (102) comprising:
a processor (110); and
a memory (114) coupled to the processor (110), wherein the memory (114) comprises:
a data unification module (120) configured to
acquire enterprise data and external intelligence data, wherein the external intelligence data includes data related to external parameters influencing the enterprise data;
identify facts from the enterprise data and the external intelligence data, wherein each of the facts is a measure in at least one of the enterprise data and the external intelligence data;
identify attributes from the enterprise data and the external intelligence data, wherein each of the attributes is indicative of a characteristic parameter to which the measure corresponds; and
identify influencing links, wherein each of the influencing links is indicative of a relationship amongst the facts and the attributes; and
a data analysis module (122) configured to
analyze the facts to obtain analyzed data, wherein the facts are analyzed in relation to at least one of the attributes and at least one of the external intelligence data; and
identifying at least one correlation in the analyzed data based on at least one of the influencing links and the external intelligence data.

7. The guided analytics system (102) as claimed in claim 6, wherein the enterprise data comprises at least one of product-wise sales and inventory, store-wise sales and inventory, date- and time-wise sales and inventory, product costs, store locations, product locations, profits, product profit margins, customer details, and product characteristics.

8. The guided analytics system (102) as claimed in claim 6, wherein the external parameters comprises at least one of social media content, competitors, census and Growth Domestic Product.

9. The guided analytics system (102) as claimed in claim 6 further comprises:
a result generating module (124) configured to generate result data based on the analyzed data and the at least one correlation, wherein the result data is indicative of a behaviour of the enterprise data.

10. The guided analytics system (102) as claimed in claim 9, wherein the data analysis module (122) is further configured to eliminate at least one outlier in the result data.

11. The guided analytics system (102) as claimed in claim 9, wherein the result generating module (124) is further configured to provide guidance based on the result data.

12. The guidance analytics system (102) as claimed in claim 6, wherein the data unification module (120) is configured to obtain at least one of at least one influencer, at least one weightage factor and at least one predefined correlation rule associated with the enterprise data and the external intelligence data, wherein the identifying the at least one correlation is based on at least one of the at least one influencer, the at least one weightage factor and the at least one predefined correlation rule.

13. A non-transitory computer-readable medium having computer-executable instructions that when executed perform acts comprising:
acquiring enterprise data;
acquiring external intelligence data, wherein the external intelligence data includes data related to external parameters influencing the enterprise data;
identifying facts from the enterprise data and the external intelligence data, wherein each of the facts is a measure in at least one of the enterprise data and the external intelligence data;
identifying attributes from the enterprise data and the external intelligence data, wherein each of the attributes is indicative of a characteristic parameter to which the measure corresponds;
identifying influencing links, wherein each of the influencing links is indicative of a relationship amongst the facts and the attributes;
analyzing the facts to obtain analyzed data, wherein the analyzing is carried out using at least one predefined analytical model, and wherein the analyzing is in relation to at least one of the attributes and at least one of the influencing links;
identifying at least one correlation in the analyzed data based on at least one of the influencing links and the external intelligence data; and
generating result data based on the analysis data and the at least one correlation, wherein the result data is indicative of a behaviour of the enterprise data.

14. The non-transitory computer-readable medium as claimed in claim 13 further performs acts comprising:
eliminating at least one outlier in the result data.
